# EUROPÄISCHE PATENTSCHRIFT

(11) **EP 2 030 118 B1**
(45) Veröffentlichungstag und Bekanntmachung des Hinweises auf die Patenterteilung: **19.06.2013**
(21) Anmeldenummer: 07728195.4
(22) Anmeldetag: 17.04.2007
(51) Int. Cl.: G06F 13/40

(54) **MEHRPROZESSOR-GATEWAY**
MULTI-PROCESSOR GATEWAY
PASSERELLE À PROCESSEURS MULTIPLES

(30) Priorität: 24.05.2006 DE 102006024848; 24.11.2006 DE 102006055512
(43) Veröffentlichungstag der Anmeldung: 04.03.2009
(73) Patentinhaber: Robert Bosch GmbH, 70442 Stuttgart (DE)
(72) Erfinder: IHLE, Markus, 72127 Jettenburg (DE); TAUBE, Jan, 72760 Reutlingen (DE); LORENZ, Tobias, 72766 Reutlingen (DE); BLEECK, Stefan, 18209 Hohenfelde (DE)
(86) Internationale Anmeldenummer: PCT/EP2007/053732
(87) Internationale Veröffentlichungsnummer: WO 2007/134922

(56) Entgegenhaltungen:
- DE-A1- 19 819 569
- DE-A1-102004 033 761

## Beschreibung

Die Erfindung betrifft ein Mehrprozessor-Gateway für mehrere serielle Busse, welche Daten paketweise übertragen.

Die Vernetzung von Steuergeräten, Sensorik und Aktuatorik mithilfe eines Netzwerkes bzw. Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem, Bussystem oder Netzwerk statt, über welches die zu übertragenden Daten in Nachrichten bzw. Botschaften übermittelt werden. Dieser Kommunikationsverkehr auf dem Bussystem, Zugriffs- und Empfangsmechanismen sowie Fehlerbehandlung werden über ein entsprechendes Protokoll geregelt, wobei der Name des jeweiligen Protokolls häufig und so auch hier auch als Synonym für das Netzwerk bzw. das Bussystem selbst verwendet wird.

Als Protokoll beispielsweise im Kfz-Bereich hat sich der CAN-Bus (Controller A-rea Network) etabliert. Dieses ist ein ereignisgesteuertes Protokoll, d. h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message I-dentifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der so genannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiten einer für das Bussystem gültigen Zeit ausgelöst.. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom so genannten Bus-Schedule. Ein solches Bussystem ist beispielsweise der TTP/C.

Eine Verbindung der Vorteile beider genannter Busarten erfolgt im Lösungsansatz des zeitgesteuerten CAN, des so genannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in so genannten exklusiven Zeitfenstern für periodische Botschaften bestimmter Kommunikationsteilnehmer und in so genannte arbitrierende Zeitfenster für spontane Botschaften mehrerer Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den so genannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, deterministisches und fehlertolerantes Bussystem insbesondere für den Einsatz in einem Kraftfahrzeug beschrieben wird. Dieses Protokoll arbeitet nach dem Verfahren des Time-Division-Multiple-Access (TDMA), wobei den Teilnehmern bzw. den zu übertragenden Botschaften feste Zeitschlitze zugewiesen werden, in denen sie einen exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen, wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit ermöglicht. Erfolgt kein Zugriff, wird der Zugriff für den nächsten Teilnehmer freigegeben. Diese Zeitspanne wird als Minislot bezeichnet, in der auf den Zugriff des ersten Teilnehmers gewartet wird.

Wie soeben dargestellt gibt es eine Vielzahl unterschiedlicher Übertragungstechnologien und damit Arten von Bussystemen oder Netzwerken. Häufig ist es so, dass mehrere Bussysteme gleicher oder unterschiedlicher Art miteinander verbunden werden müssen. Dazu dient eine Busschnittstelleneinheit, ein so genanntes Gateway. Ein Gateway ist somit eine Schnittstelle zwischen verschiedenen Bussen, die von gleicher oder unterschiedlicher Art sein können, wobei das Gateway Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt. Dabei wird dieses CPU-Interface durch diesen Datenaustausch zusätzlich zu den zum Teilnehmer selbst zu übertragenden Botschaften stark belastet wodurch sich zusammen mit der sich daraus ergebenden Übertragungsstruktur eine relativ niedrige Datenübertragungsgeschwindigkeit ergibt. Weiterhin gibt es integrierte Kommunikationscontroller oder Kommunikationsbausteine, die sich einen gemeinsamen Nachrichtenspeicher, das so genannte Nachrichtenspeicher bzw. Message-RAM, teilen um damit die Strukturnachteile zu kompensieren. Allerdings sind solche integrierten Kommunikationsbausteine dadurch bezüglich der Datenübertragung sehr unflexibel und insbesondere auf eine bestimmte Anzahl von Busanschlüssen und meist auch auf das gleiche Bussystem festgelegt.

Die Patentanmeldung DE 10 2004 033761 A1 offenbart eine Vorrichtung zum Datenaustausch mit mindestens zwei Bussystemen, wobei ein Gateway enthalten ist, welches mindestens zwei Steuereinheiten aufweist, die die schnittstellenbezogenen Funktionen zum Datenaustausch parallel abarbeiten. Die Anzahl der Steuereinheiten entspricht hierbei der Anzahl der Datenbussysteme, die miteinander Daten austauschen.

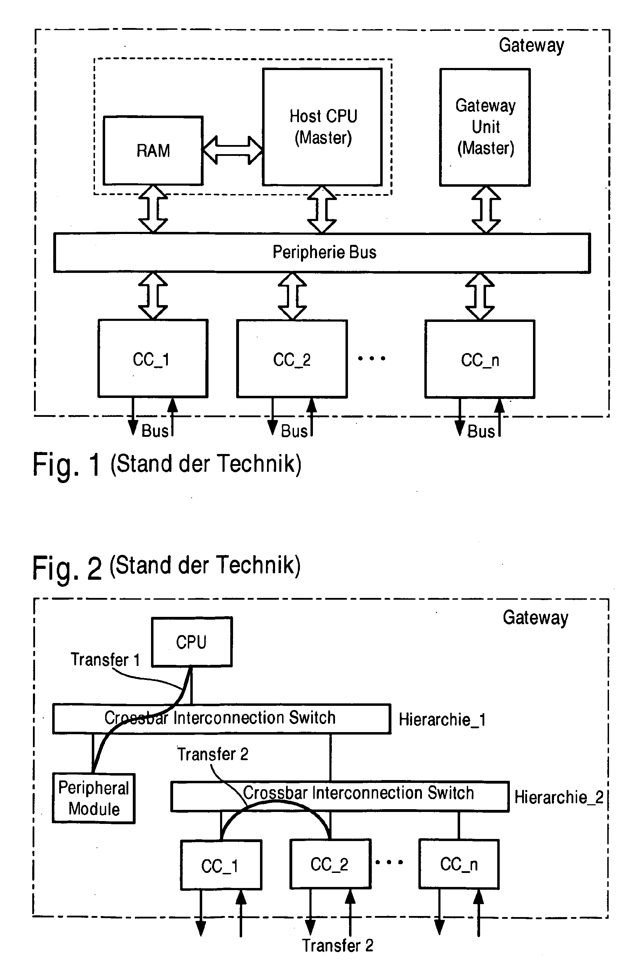

Figur 1 zeigt ein Bussystem nach dem Stand der Technik. Das Bussystem enthält mehrere Kommunikationsbausteine bzw. Communication Controller (CC), an die serielle Datenbusse anschließbar sind. Das in Figur 1 dargestellte Mehrprozessor-Gateway enthält einen internen Systembus bzw. Peripheriebus, an den neben den Kommunikationsbausteinen eine Host-CPU und eine sogenannte Gateway-Unit, die einen zweiten Prozessor darstellt, angeschlossen sind. Die Kommunikation innerhalb des Mehrprozessor-Gateways erfolgt nach dem Master/Slave-Prinzip, wobei die Kommunikationsbausteine als Slave-Einheiten arbeiten und die Host-CPU sowie die Gateway-Unit als Master-Einheiten fungieren. Die Kommunikationsbausteine initiieren dabei als Slave-Einheiten nicht selbst einen Datentransfer, sondern nur auf Aufforderung durch einen Master.

Die Host-CPU konfiguriert, kontrolliert und steuert die einzelnen Kommunikationsbausteine CC. Die CPU liest dabei empfangene Nachrichten bzw. Botschaften aus, verarbeitet sie und erzeugt neue Nachrichten. Ferner sorgt die CPU für das Versenden der Botschaften. Beispielsweise ist es bei einer einfachen Gateway-Situation oftmals nur erforderlich, die empfangenen Daten aus einem Kommunikationsbaustein auszulesen und in einen oder mehrere andere Kommunikationsbausteine zum Versand zu schreiben. Wird kein DMA-Controller verwendet, transferiert die Host-CPU die Daten wortweise aus dem Kommunikationsbaustein in den Datenspeicher RAM oder in einen CPU-internen Speicher. Die Daten werden anschließend bearbeitet und in entsprechende Kommunikationsbausteine übertragen. Der Datenspeicher RAM enthält neben den Daten auch einen Programmcode, welcher von der CPU ausgeführt wird. In dem Datenspeicher RAM sind die Daten beispielsweise in Form von Botschaftsobjekten bzw. Nachrichten der Kommunikationsbausteine CC für die weitere Verarbeitung durch die CPU abgelegt.

Die Kommunikationsbausteine CC stellen die Datenverbindung des Mehrprozessor-Gateways zu den einzelnen Bussystemen, d. h. zu den seriellen Bussen dar. Die Kommunikationsbausteine weisen bei einem herkömmlichen Mehrprozessor-Gateway jeweils einen Botschafts- bzw. Nachrichtenspeicher auf. In dem Nachrichtenspeicher werden die über den Bus empfangenen und zu versendenden Nachrichten abgelegt. Die Host-CPU kann dabei über eine passive Schnittstelle auf den Nachrichtenspeicher und die darin enthaltenen Datenobjekte zugreifen.

Der Peripherie- bzw. Systembus dient zur Verbindung der einzelnen Komponenten untereinander. Gesteuert vom Bus-Master werden Daten in Module geschrieben und wieder ausgelesen. Die Gateway-Unit übernimmt die Steuerung der Gateway-Funktionen. Die Gateway-Unit kann beispielsweise durch einen Co-Prozessor gebildet werden, der den internen Nachrichtentransfer steuert. Die Gateway-Unit dient zur Entlastung der Host-CPU. Die von der Gateway-Unit übernommenen Gateway-Funktionen umfassen beispielsweise das Bearbeiten von Nachrichten, das Vergleichen und Zusammenstellen neuer Nachrichten sowie das Versenden der Nachrichten. Diese Funktionen werden durch die Gateway-Unit als Bus-Master ausgeführt. Die Übertragungsbandbreite des Systembusses wird zwischen den beiden Master-Einheiten, d. h. zwischen der Gateway-Unit und dem Bus-Master aufgeteilt.

Je nach Komplexität und Anzahl der Master können bei dem Peripherie- bzw. Systembus auch hierarchische Bussysteme eingesetzt werden.

Figur 2 zeigt beispielsweise ein hierarchisches Bussystem mit zwei Hierarchiestufen (Crossbar Interconnection Switches). Mit dem hierarchischen Aufbau des Bussystems bei dem in Figur 2 dargestellten Mehrprozessor-Gateway ist es möglich, mehrere interne Datentransfers gleichzeitig durchzuführen, sofern der Datentransfer nicht zwischen den beiden Hierarchieebenen stattfindet. Bei dem in Figur 2 dargestellten Beispiel erfolgt ein Datentransfer der Hierarchieebene 1 zwischen der CPU und dem Peripheriemodul und ein zweiter Datentransfer zwischen zwei Kommunikationsbausteinen auf einer anderen Hierarchieebene.

Bei herkömmlichen Mehrprozessor-Gateways wird die Datenübertragungsbandbreite des Systembusses bzw. eines hierarchisch aufgebauten Bussystems zwischen den Bus-Mastern aufgeteilt. Dabei werden unterschiedliche Zugriffsverfahren eingesetzt. Beispielsweise wird den verschiedenen Bus-Mastern jeweils die gleiche Übertragungsbandbreite zugeteilt. Alternativ können verschiedene Master-Einheiten unterschiedliche Prioritäten zugewiesen werden, wobei die Master-Einheit mit der höheren Priorität, beispielsweise die Host-CPU, beim Datentransfer Vorrang hat.

Herkömmliche Mehrprozessor-Gateways haben somit den Nachteil, dass stets eine Master- Einheit warten muss, bis ein interner Datentransfer ausgeführt werden kann. Es kommt zu Zugriffskonflikten, wenn verschiedene Master gleichzeitig auf den gemeinsamen Systembus zugreifen möchten. Hierdurch erhöhen sich die Latenzzeiten bzw. Wartezeiten für den internen Datentransfer. Nutzt beispielsweise die Gateway-Unit den Systembus für einen Datentransfer, treten für die Host-CPU selbst Wartezyklen auf, bevor diese wieder auf Daten in einem Peripheriemodul bzw. einen Kommunikationsbaustein oder anderen Speichern zugreifen kann. Bei einem laufenden Datentransfer eines Masters kann somit eine andere Master- Einheit nicht auf Peripheriemodule zugreifen. Während dieser Wartezeit kann zudem die Host-CPU keine Datenverarbeitungsoperationen ausführen.

Es ist daher die Aufgabe der vorliegenden Erfindung, ein Mehrprozessor-Gateway zu schaffen, welches parallele Datentransfers verschiedener Master ohne Wartezeiten ermöglicht.

Diese Aufgabe wird erfindungsgemäß durch ein Mehrprozessor-Gateway mit den im Patentanspruch 1 angegebenen Merkmalen gelöst.

Die Erfindung schafft ein Mehrprozessor-Gateway mit mehreren seriellen Bussen, welche Daten paketweise übertragen, wobei das Mehrprozessor-Gateway aufweist:
- mehrere Kommunikationsbausteine, die jeweils zum Anschluss eines seriellen Busses vorgesehen sind,
- mehrere Prozessoren zur Verarbeitung von Daten, die wortweise über einen zu dem jeweiligen Prozessor zugehörigen internen Systembus zwischen dem Prozessor und dem Kommunikationsbaustein übertragen werden,
wobei die internen Systembusse des Mehrprozessor-Gateways an die Kommunikationsbausteine angeschlossen sind, die jeweils für jeden Systembus eine zugehörige Interface-Einheit aufweisen,
wobei jeder Prozessor über seinen zugehörigen Systembus und die zu dem Systembus zugehörige Interface-Einheit eines Kommunikationsbausteins Daten unabhängig von den übrigen Prozessoren mit dem an den Kommunikationsbaustein angeschlossenen seriellen Bus ohne Wartezeit austauscht.

Bei einer bevorzugten Ausführungsform des erfindungsgemäßen Mehrprozessor-Gateways weist jeder Kommunikationsbaustein auf:
- eine an den seriellen Bus angeschlossene Kommunikations-Protokoll-Einheit zur Umsetzung zwischen Datenpaketen und Nachrichten, die jeweils aus mehreren Datenworten bestehen,
- eine Nachrichtenweiterleitungseinheit zur Weiterleitung von Nachrichten zwischen mindestens einem Nachrichtenspeicher und der Kommunikationsprotokolleinheit sowie Pufferspeicher,
- mehreren Interface- Einheiten, die jeweils an einen zugehörigen Systembus des Mehrprozessor-Gateways angeschlossen sind,
wobei jede Interface- Einheit mit mindestens einem zugehörigen Pufferspeicher verbunden ist, der eine Nachricht zwischenspeichert, wobei eine Übertragung von Datenworten über mehrere Systembusse und deren zugehörige Interface-Einheiten von und zu den Pufferspeichern der Interface-Einheiten zeitgleich ohne Wartezeit erfolgt.

Bei einer Ausführungsform des erfindungsgemäßen Mehrprozessor-Gateways handelt es sich bei dem seriellen Bus um einen Ethernet-Bus.

Bei einer weiteren Ausführungsform des erfindungsgemäßen Mehrprozessor-Gateways handelt es sich bei dem seriellen Bus um einen Feldbus.

Bei einer alternativen Ausführungsform des erfindungsgemäßen Mehrprozessor-Gateways handelt es sich bei dem Feldbus um einen CAN-Bus.

Bei einer weiteren Ausführungsform des erfindungsgemäßen Mehrprozessor-Gateways ist der Feldbus ein FlexRay-Bus.

Bei einer weiteren Ausführungsform des erfindungsgemäßen Mehrprozessor-Gateways ist der Feldbus ein MOST-Bus.

Bei einer weiteren Ausführungsform des erfindungsgemäßen Mehrprozessor-Gateways ist der Feldbus ein LIN-Bus.

Bei einer Ausführungsform des erfindungsgemäßen Mehrprozessor-Gateways bildet jeder Prozessor einen Bus-Master für seinen zugehörigen Systembus.

Bei einer weiteren Ausführungsform des erfindungsgemäßen Mehrprozessor-Gateways bilden die Kommunikationsbausteine Slave-Einheiten für die Systembusse.

Bei einer Ausführungsform des erfindungsgemäßen Mehrprozessor-Gateways weist jeder Systembus einen Datenbus, einen Adressbus und einen Steuerbus auf.

Bei einer Ausführungsform des erfindungsgemäßen Mehrprozessor-Gateways ist eine an die Systembusse angeschlossener Datenverarbeitungseinheit als Prozessor ausgelegt, der einen Datentransfer zwischen den an den Kommunikationsbaustein angeschlossenen seriellen Bussen steuert.

Bei einer weiteren Ausführungsform ist eine an die Systembusse angeschlossene Datenverarbeitungseinheit als Co-Prozessor ausgeführt, der einen Datentransfer zwischen den an den Kommunikationsbaustein angeschlossenen seriellen Bussen steuert.

Bei einer alternativen Ausführungsform ist eine an die Systembusse angeschlossene Datenverarbeitungseinheit als FSM ausgeführt, der einen Datentransfer zwischen den an den Kommunikationsbaustein angeschlossenen seriellen Bussen steuert.

Im Weiteren werden bevorzugte Ausführungsformen des erfindungsgemäßen Mehrprozessor-Gateways unter Bezugnahme auf die beigefügten Figuren zur Erläuterung erfindungswesentlicher Merkmale beschrieben.

Es zeigen:
- Figur 1:: ein Gateway nach dem Stand der Technik;
- Figur 2:: ein Gateway mit hierarchischem Systembus nach dem Stand der Technik;
- Figur 3:: eine Ausführungsform des erfindungsgemäßen Mehrprozessor-Gateways;
- Figur 4:: ein Blockdiagramm einer möglichen Ausführungsform eines in dem erfindungsgemäßen Mehrprozessor-Gateway enthaltenen Kommunikationsbausteins.

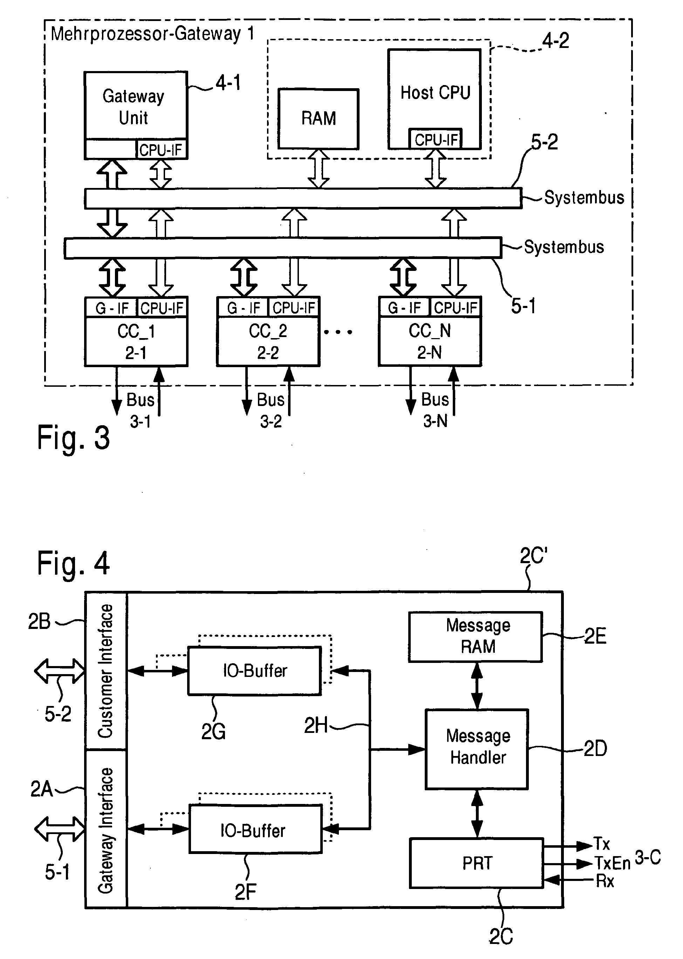

Wie man aus Figur 3 erkennen kann, weist das erfindungsgemäße Mehrprozessor-Gateway 1 mehrere Kommunikationsbausteine 2-1, 2-2, 2-n auf. Jeder Kommunikationsbaustein 2-i ist jeweils zum Anschluss eines seriellen Busses 3-i vorgesehen. Das Mehrprozessor-Gateway 1 enthält mehrere Prozessoren 4-i zur Verarbeitung von Daten. Bei der in Figur 3 dargestellten Ausführungsform bildet der erstes Prozessor 4-1 eine Gateway-Unit, die den Nachrichtentransfer zwischen den seriellen Bussen 3-i koordiniert. Ein weiterer Prozessor 4-2 enthält eine CPU (Central Processing Unit) und einen Daten- und Befehlsspeicher RAM. Jeder Prozessor 4-1, 4-2 des erfindungsgemäßen Mehrprozessor-Gateways 1 weist einen zugehörigen internen Systembus auf. Bei der in Figur 3 dargestellten Ausführungsform weist die Gateway-Unit 4-1 einen Systembus 5-1 auf und der Prozessor 4-2 einen Systembus 5-2. Während die Gateway-Unit 4-1 den Nachrichtentransfer zwischen den Bussen 3-i koordiniert, erfolgt die eigentliche Datenverarbeitung durch die Host-CPU des Prozessors 4-2. Die beiden Systembusse 5-1, 5-2 umfassen bei einer Ausführungsform einen Adressbus, einen Datenbus und einen Steuerbus. Die Gateway-Unit 4-1 ist über ein Gateway-Interface mit dem Systembus 5-1 und über ein CPU-Interface mit dem Systembus 5-2 verbunden. Die Host-CPU des Prozessors 4-2 ist über ein CPU-Interface mit dem Systembus 5-2 verbunden. Die Gateway-Unit 4-1 und der Datenverarbeitungsprozessor 4-2 arbeiten als Bus-Master ihres jeweiligen Systembusses. Die Kommunikationsbausteine 2 arbeiten als Slave-Einheiten und sind bei der in Figur 3 dargestellten Ausführungsform mit beiden Systembussen über eine zugehörige Interface-Einheit verbunden. Die Anzahl der bei dem Mehrprozessor-Gateway 1 eingesetzten Systembusse 5-i entspricht der Anzahl der Master-Einheiten 4-i. Bei weiteren Ausführungsformen des erfindungsgemäßen Mehrprozessor-Gateways 1 können auch mehr als zwei Master-Einheiten vorgesehen sein, wobei jede Master-Einheit einen zugehörigen Systembus 5-i erhält. Das erfindungsgemäße Mehrprozessor-Gateway 1 weist somit ein mehrfaches Vernetzungskonzept auf.

Figur 4 zeigt eine mögliche Ausführungsform eines in dem erfindungsgemäßen Mehrprozessor-Gateway 1 eingesetzten Kommunikationsbausteins 2-i. Der Kommunikationsbaustein 2 weist ein Gateway-Interface 2A und ein Customer-Interface 2B auf. Das Gateway-Interface 2A bildet die Schnittstelle des Kommunikationsbausteins 2 zu dem Systembus 5-1 der Gateway-Unit 4-1. Das Customer-Interface 2B bildet die Schnittstelle des Kommunikationsbausteins 2 mit dem Systembus 5-2 der Datenverarbeitungseinheit 4-2. Der Kommunikationsbaustein enthält ferner eine an den seriellen Bus 3 angeschlossene Kommunikationsprotokolleinheit 2C zur Umsetzung zwischen Datenpaketen DP, welche über den seriellen Bus übertragen werden, und Nachrichten bzw. Messages, die jeweils aus einem oder mehreren Datenworten DW bestehen.

Der Kommunikationsbaustein 2-i enthält ferner eine Nachrichtenweiterleitungseinheit 2D zur Weiterleitung von Nachrichten bzw. Messages zwischen mindestens einem Nachrichtenspeicher 2 E und der Kommunikationsprotokolleinheit 2C. Darüber hinaus dient die Nachrichtenweiterleitungseinheit 2D zur Weiterleitung von Nachrichten zwischen dem Nachrichtenspeicher 2 E, der Kommunikations-protokolleinheit 2C sowie Pufferspeichern 2F, 2G. Jede Interface-Einheit 2A, 2B weist jeweils mindestens einen zugehörigen Pufferspeicher auf. Bei der in Figur 4 dargestellten Ausführungsform weist das Gateway-Interface 2A den Pufferspeicher 2F und das Customer-Interface 2B den Pufferspeicher 2G auf. Die Pufferspeicher dienen zur Zwischenspeicherung von Nachrichten. Intern werden die Nachrichten zwischen den Pufferspeichern 2F, 2G und der Nachrichtenweiterleitungseinheit 2D über Datenleitungen 2H übertragen. Der Kommunikationsbaustein 2 stellt die Verbindung des Master-Gateways 1 zu einem zugehörigen seriellen Bus 3-i dar. Bei dem seriellen Bus 3-i kann es sich beispielsweise um einen Ethernet-Bus oder einen Feldbus handeln. Wobei es sich bei dem Feldbus um einen CAN-Bus, einen FlexRay-Bus, einen MOST-Bus oder einen LIN-Bus handeln kann.

Bei einer Ausführungsform des erfindungsgemäßen Mehrprozessor-Gateways 1 bildet jeder Prozessor 4-i einen Bus-Master für seinen zugehörigen Systembus 5-i. Bei einer alternativen Ausführungsform ist es möglich, dass jeder Systembus 5-i mehr als einen Bus-Master 4-i aufweist. Die Anzahl der Interface-Einheiten des Kommunikationsbausteins 2 entspricht vorzugsweise der Anzahl der in dem Mehrprozessor-Gateway 1 eingesetzten Systembusse 5-i. Bei der in Figur 4 dargestellten Ausführungsform weist der Kommunikationsbaustein 2-i zwei Interface-Einheiten 2A, 2B und jeweils zugehörige Pufferspeicher 2F, 2G auf. Die Daten können über beide Interface-Einheiten 2A, 2B parallel in das Kommunikationsbaustein-Modul eingeschrieben bzw. daraus ausgelesen werden. Die Arbitrierung der Daten erfolgt bei dem erfindungsgemäßen Mehrprozessor-Gateway 1 innerhalb des Kommunikationsbausteins 2. Bei dem Kommunikationsbaustein kann der Zwischenspeicher 2F, der über das Gateway-Interface 2A an dem Systembus 5-1 angeschlossen ist, zu dem Datentransfer innerhalb einer Gateway-Operation der Gateway-Unit 4.1 verwendet werden, ohne dass die Host-CPU 4-2 davon beeinflusst wird. Der Gateway-Bus bzw. Systembus 5-1, dessen Bus-Master durch die Gateway-Unit 4-1 gebildet wird, dient wie der CPU-Bus bzw. Systembus 5-2, dessen Bus-Master durch den Prozessor 4-2 gebildet wird, zur internen Datenübertragung bzw. zum Datentransfer zwischen zwei Kommunikationsbausteinen 2-i. Der interne Datentransfer erfolgt bei dem erfindungsgemäßen Mehrprozessor-Gateway 1 über Datenleitungen des jeweiligen Systembusses 5-i wortweise. Dabei werden die Daten parallel über die Datenleitungen des Datenbusses, der einen Teil des Systembusses 5-i bildet, übertragen, wobei die Wortbreite der Busbreite des jeweiligen Datenbusses entspricht. Während der interne Datentransfer wortweise erfolgt, werden die Daten über die externen seriellen Datenbusse 3-i paketweise übertragen, wobei jedes Datenpaket DP seinerseits Header- bzw. Verwaltungsdaten umfasst und andererseits Payload- bzw. Nutzdaten. Die in den Kommunikationsbausteinen 2-i jeweils enthaltenen Kommunikationsprotokolleinheiten 2C führen die Umsetzung zwischen den Datenpaketen DP und Nachrichten bzw. Messages MSG durch, wobei jede Message MSG jeweils aus einem oder mehreren Datenworten DW besteht. Empfängt die Kommunikationsprotokolleinheit 2C Datenpakete DP, werden diese in interne Nachrichten bzw. Messages MSG umgesetzt und beispielsweise in dem Nachrichtenzwischenspeicher 2E zwischengespeichert. Abschließend werden die Datenworte DW der Nachricht MSG über die Nachrichtenweiterleitungseinheit 2D in einen Pufferspeicher 2F, 2G übertragen. Die Speicherkapazität der Pufferspeicher entspricht bei einer möglichen Ausführungsform jeweils der Wortbreite mindestens eines Datenwortes DW. Die Übertragung der Datenworte DW über die Systembusse 5-i und deren zugehörige Interface-Einheiten von und zu den Pufferspeichern 2F, 2G erfolgt zeitgleich ohne Wartezeit.

Bei einer möglichen Ausführungsform sind die verschiedenen Systembusse 5-1, 5-2 des Mehrprozessor-Gateway 1 unterschiedlich ausgelegt. Bedingt durch den speziellen Einsatz des Gateway-Busses 5-1 kann beispielsweise dieser Systembus minimalisiert ausgeführt werden. Der Systembus 5-1 bzw. Gateway-Bus 5-1 hat dann nur eine minimale Adress- und Datenbreite sowie eine geringe Anzahl von Steuerleitungen.

Ein Vorteil des erfindungsgemäßen Mehrprozessor-Gateways 1 besteht darin, dass die Auslastung des CPU-Systembusses 5-2 reduziert wird, da der Datentransfer zur Übertragung von Daten zwischen einem ersten Kommunikationsbausteins 2-i mit dem daran angeschlossenen seriellen Datenbus 3-i und einem zweiten Kommunikationsbausteins 2-j mit dem daran angeschlossenen seriellen Datenbus 3-j über den getrennten Gateway-Bus 5-1 erfolgt. Hierdurch kann die Host-CPU des Prozessors 4-2 ohne Verzögerung bzw. ohne Wartezeiten arbeiten und jede Reaktion des Mehrprozessor-Gateways 1 ist auf einfache Weise vorhersehbar, d. h. sie hängt nicht von der Belastung durch den externen Datenstrom der verschiedenen seriellen Busse 3-i ab. Bei dem erfindungsgemäßen Mehrprozessor-Gateway 1 werden die Latenzzeiten für den Datentransfer zwischen Kommunikationsbausteinen 2 minimiert und somit auch die Latenzzeit für die Übertragung der Nachrichten zwischen zwei externen seriellen BusSystemen, beispielsweise einem CAN-Feldbus und einem FlexRay-Feldbus, minimiert.

## Patentansprüche

1. Mehrprozessor-Gateway für mehrere serielle Busse (3), welche Daten paketweise übertragen,
wobei das Mehrprozessor-Gateway (1) aufweist:
(a) mehrere Kommunikationsbausteine (2), die jeweils zum Anschluss eines seriellen Busses (3) vorgesehen sind;
(b) mehrere Prozessoren (4) zur Verarbeitung von Daten, die wortweise über einen zu dem jeweiligen Prozessor (4) zugehörigen internen Systembus (5) zwischen dem Prozessor (4) und den Kommunikationsbausteinen (3) übertragen werden;
(c) **dadurch gekennzeichnet, dass** die internen Systembusse (5) des Mehrprozessor-Gateways (1) an die Kommunikationsbausteine (2) angeschlossen sind, die jeweils für jeden Systembus (5) eine zugehörige Interface-Einheit (2A, 2B) aufweisen;
(d) wobei jeder Prozessor (4) über seinen zugehörigen Systembus (5) und die zu dem Systembus zugehörige Interface-Einheit eines Kommunikationsbausteins (2) Daten unabhängig von den übrigen Prozessoren (4) mit dem an dem Kommunikationsbaustein (2) angeschlossenen seriellen Bus (3) ohne Wartezeit austauscht.

2. Mehrprozessor-Gateway nach Anspruch 1,
wobei jeder Kommunikationsbaustein (2) aufweist:
(a1) eine an den seriellen Bus (3) angeschlossene Kommunikations-Protokolleinheit (2C) zur Umsetzung zwischen Datenpaketen (DP) und Nachrichten (MSG), die jeweils aus mehreren Datenworten (DW) bestehen;
(a2) eine Nachrichtenweiterleitungseinheit (2D) zur Weiterleitung von Nachrichten (MSG) zwischen mindestens einem Nachrichtenspeicher (2 E) und der Kommunikations-Protokolleinheit (2C) sowie Pufferspeichern (2F, 2G);
(a3) mehrere Interface- Einheiten (2A, 2B), die jeweils an einen zugehörigen Systembus (5-1, 5-2) des Mehrprozessor-Gateways (1) angeschlossen sind;
(a4) wobei jede Interface-Einheit (2A, 2B) mit mindestens einem zugehörigen Pufferspeicher (2F, 2G) verbunden ist, der eine Nachricht zwischenspeichert, wobei eine Übertragung von Datenworten (DW) über mehrere Systembusse (5-1, 5-2) und deren zugehörige Interface-Einheiten (2A, 2B) von und zu den Pufferspeichern (2F, 2G) der Interface-Einheiten zeitgleich ohne Wartezeit erfolgt.

3. Mehrprozessor-Gateway nach Anspruch 1,
wobei der serielle Bus (3) ein Ethernet-Bus ist.

4. Mehrprozessor-Gateway nach Anspruch 1,
wobei der serielle Bus (3) ein Feldbus ist.

5. Mehrprozessor-Gateway nach Anspruch 3,
wobei der Feldbus ein CAN-Bus ist.

6. Mehrprozessor-Gateway nach Anspruch 4,
wobei der Feldbus ein FlexRay-Bus ist.

7. Mehrprozessor-Gateway nach Anspruch 4,
wobei der Feldbus ein MOST-Bus ist.

8. Mehrprozessor-Gateway nach Anspruch 4,
wobei der Feldbus ein LIN-Bus ist.

9. Mehrprozessor-Gateway nach Anspruch 1,
wobei jeder Prozessor (4) einen Busmaster für seinen zugehörigen Systembus (5) bildet.

10. Mehrprozessor-Gateway nach Anspruch 1,
wobei die Kommunikationsbausteine (2) Slave-Einheiten für die Systembusse (5) bilden.

11. Mehrprozessor-Gateway nach Anspruch 1,
wobei jeder Systembus (5) einen Datenbus, einen Adressbus und einen Steuerbus aufweist.

12. Mehrprozessor-Gateway nach Anspruch 1,
wobei eine an die Systembusse (5) angeschlossene Verarbeitungseinheit (4-1) als Prozessor ausgelegt ist, der einen Datentransfer zwischen den an den Kommunikationsbausteinen (2) angeschlossenen seriellen Bussen (3) steuert.

13. Mehrprozessor-Gateway nach Anspruch 1,
wobei eine an die Systembusse (5) angeschlossene Verarbeitungseinheit (4-1) als Co-Prozessor ausgelegt ist, der einen Datentransfer zwischen den an den Kommunikationsbaustein (2) angeschlossenen seriellen Bussen (3) steuert.

14. Mehrprozessor-Gateway nach Anspruch 1,
wobei eine an die Systembusse (5) angeschlossene Verarbeitungseinheit (4-1) als Finite State Machine ausgelegt ist, der einen Datentransfer zwischen den an den Kommunikatiönsbaustein (2) angeschlossenen seriellen Bussen (3) steuert.

## Claims

1. Multiprocessor gateway for a plurality of serial buses (3) which transmit data on a packet-by-packet basis,
wherein the multiprocessor gateway (1) has:
(a) a plurality of communication chips (2) which are each provided for the connection of a serial bus (3);
(b) a plurality of processors (4) for processing data which are transmitted between the processor (4) and the communication chips (3) on a word-by-word basis via an internal system bus (5) associated with the respective processor (4);
(c) **characterized in that** the internal system buses (5) of the multiprocessor gateway (1) are connected to the communication chips (2), which each have an associated interface unit (2A, 2B) for each system bus (5);
(d) wherein each processor (4) uses its associated system bus (5) and that interface unit of a communication chip (2) which is associated with the system bus to interchange data, independently of the other processors (4), with the serial bus (3) connected to the communication chip (2) without a waiting time.

2. Multiprocessor gateway according to Claim 1, wherein each communication chip (2) has:
(a1) a communication protocol unit (2C), connected to the serial bus (3), for converting between data packets (DP) and messages (MSG) which each comprise a plurality of data words (DW);
(a2) a message forwarding unit (2D) for forwarding messages (MSG) between at least one message memory (2E) and the communication protocol unit (2C) and also buffer memories (2F, 2G);
(a3) a plurality of interface units (2A, 2B) which are each connected to an associated system bus (5-1, 5-2) of the multiprocessor gateway (1);
(a4) wherein each interface unit (2A, 2B) is connected to at least one associated buffer memory (2F, 2G) which buffer-stores a message, with data words (DW) being transmitted from and to the buffer memories (2F, 2G) of the interface units simultaneously without a waiting time via a plurality of system buses (5-1, 5-2) and the associated interface units (2A, 2B) thereof.

3. Multiprocessor gateway according to Claim 1, wherein the serial bus (3) is an Ethernet bus.

4. Multiprocessor gateway according to Claim 1, wherein the serial bus (3) is a field bus.

5. Multiprocessor gateway according to Claim 3, wherein the field bus is a CAN bus.

6. Multiprocessor gateway according to Claim 4, wherein the field bus is a FlexRay bus.

7. Multiprocessor gateway according to Claim 4, wherein the field bus is a MOST bus.

8. Multiprocessor gateway according to Claim 4, wherein the field bus is a LIN bus.

9. Multiprocessor gateway according to Claim 1, wherein each processor (4) forms a bus master for its associated system bus (5).

10. Multiprocessor gateway according to Claim 1, wherein the communication chips (2) form slave units for the system buses (5).

11. Multiprocessor gateway according to Claim 1, wherein each system bus (5) has a data bus, an address bus and a control bus.

12. Multiprocessor gateway according to Claim 1, wherein a processing unit (4-1) connected to the system buses (5) is designed as a processor which controls a data transfer between the serial buses (3) connected to the communication chips (2).

13. Multiprocessor gateway according to Claim 1, wherein a processing unit (4-1) connected to the system buses (5) is designed as a coprocessor which controls a data transfer between the serial buses (3) connected to the communication chips (2).

14. Multiprocessor gateway according to Claim 1, wherein a processing unit (4-1) connected to the system buses (5) is designed as a Finite State Machine which controls a data transfer between the serial buses (3) connected to the communication chips (2).

## Revendications

1. Passerelle multiprocesseur destinée à une pluralité de bus série (3) transmettant des données par paquets, la passerelle multiprocesseur (1) comprenant:
(a) une pluralité de composants de communication (2) qui sont respectivement prévus pour la connexion d'un bus série (3),
(b) une pluralité de processeurs (4) destinés au traitement de données qui sont transmises sous forme de mots par l'intermédiaire d'un bus système interne (5) correspondant au processeur respectif (4) entre le processeur (4) et les composants de communication (3) ; **caractérisé en ce que**
(c) les bus systèmes internes (5) de la passerelle multiprocesseur (1) sont reliés aux composants de communication (2) qui comprennent respectivement pour chaque bus système (5) une unité d'interface correspondante (2A, 2B),
(d) chaque processeur (4) échangeant des données sans temps de retard, par l'intermédiaire du bus système qui lui correspond (5) et de l'unité d'interface correspondant au bus système d'un composant de communication (2) indépendamment des processeurs (4) restants avec le bus série (3) connecté au composant de communication (2).

2. Passerelle multiprocesseur selon la revendication 1, dans laquelle chaque composant de communication (2) comprend:
(a1) une unité de protocole de communication (2C) connectée au bus série (3) pour effectuer une conversion entre des paquets de données (DP) et des messages (MSG) qui sont respectivement constitués de multiples mots de données (DW) ;
(a2) une unité de réexpédition de messages (2D) destinée à réexpédier des messages (MSG) entre au moins une mémoire de messages (2E) et l'unité de protocole de communication (2C) ainsi que des mémoires tampon (2F, 2G) ;
(a3) une pluralité d'unités d'interface (2A, 2B) qui sont respectivement connectées à un bus système correspondant (5-1, 5-2) de la passerelle multiprocesseur (1) ;
(a4) chaque unité d'interface (2A, 2B) étant connectée à au moins une mémoire tampon correspondante (2F, 2G) qui met en mémoire tampon un message, une transmission de mots de données (DW) s'effectuant simultanément sans temps d'attente par l'intermédiaire d'une pluralité de bus système (5-1, 5-2) et des unités d'interface (2A, 2B) qui leur correspondent depuis et vers les mémoires tampons (2F, 2G) des unités d'interface.

3. Passerelle multiprocesseur selon la revendication 1, dans laquelle le bus série (3) est un bus Ethernet.

4. Passerelle multiprocesseur selon la revendication 1, dans laquelle le bus série (3) est un bus de terrain.

5. Passerelle multiprocesseur selon la revendication 3, dans laquelle le bus de terrain est un bus CAN.

6. Passerelle multiprocesseur selon la revendication 4, dans laquelle le bus de terrain est un bus FlexRay.

7. Passerelle multiprocesseur selon la revendication 4, dans laquelle le bus de terrain est un bus MOST.

8. Passerelle multiprocesseur selon la revendication 4, dans laquelle le bus de terrain est un bus LIN.

9. Passerelle multiprocesseur selon la revendication 1, dans laquelle chaque processeur (4) constitue un maître de bus pour le bus système (5) qui lui correspond.

10. Passerelle multiprocesseur selon la revendication 1, dans laquelle les composants de communication (2) constituent des unités esclaves pour les bus système (5).

11. Passerelle multiprocesseur selon la revendication 1, dans laquelle chaque bus système (5) comprend un bus de données, un bus d'adresse et un bus de commande .

12. Passerelle multiprocesseur selon la revendication 1, dans laquelle une unité de traitement (4-1) reliée aux bus système (5) est réalisée sous la forme d'un processeur qui commande un transfert de données entre les bus série (3) reliés aux composants de communication (2).

13. Passerelle multiprocesseur selon la revendication 1, dans laquelle une unité de traitement (4-1) reliée aux bus système (5) est réalisée sous la forme d'un coprocesseur qui commande ledit transfert de données entre les bus série (3) reliés aux composants de communication (2).

14. Passerelle multiprocesseur selon la revendication 1, dans laquelle une unité de traitement (4-1) reliée aux bus système (5) est réalisée sous la forme d'un automate fini qui commande un transfert de données entre les bus série (3) reliés aux composants de communication (2).
